# EUROPEAN PATENT APPLICATION

(11) **EP 4 498 729 A1**
(43) Date of publication of application: **29.01.2025**
(21) Application number: 23773555.0
(22) Date of filing: 24.02.2023
(51) Int. Cl.: H04W 36/06

(54) **CARRIER SWITCHING METHOD AND APPARATUS, AND TERMINAL DEVICE**

(30) Priority: 23.03.2022 CN 202210293879
(71) Applicant: Datang Mobile Communications Equipment Co., Ltd., Beijing 100085 (CN)
(72) Inventor: WANG, Junwei, Beijing 100085 (CN); GAO, Qiubin, Beijing 100085 (CN)
(74) Representative: Studio Torta S.p.A.
(86) International application number: PCT/CN2023/078107
(87) International publication number: WO 2023/179304

(57) **Abstract**

A method for carrier switching, a device for carrier switching, and a user equipment are provided, which relates to the field of communication technology. The method includes: determining a carrier switching location based on switching configurations of carriers in the bands, where the quantity of configured bands used for switching is greater than 2; and performing carrier switching based on the determined carrier switching location.

## Description

### CROSS-REFERENCE TO RELATED APPLICATION

This application claims a priority to Chinese Patent Application No. 202210293879.8 filed on March 23, 2022, which is incorporated in its entirety by reference herein.

### TECHNICAL FIELD

The present application relates to the field of communication technology, in particular to a method for carrier switching, a device for carrier switching, and user equipment.

### BACKGROUND

The related technical solution addresses the switching between two different carriers in two frequency ranges (or bands) for a terminal. In such a scenario, in a case of configuring a carrier switching location, it is configured based on a single carrier, which is of a Boolean type. That is, it is either configured as TRUE (switching is performed on a current carrier) or FALSE (switching is not performed on the current carrier). Usually, for two carriers in two bands, in a case that one carrier is configured as TRUE, the other carrier is configured as FALSE. However, when the quantity of frequency ranges/carriers for switching increases to three or four, if the carrier switching location is still determined using the Boolean configuration method, it may not be possible to determine a carrier for performing switching, which results in data transmission failure.

### SUMMARY

Embodiments of the present application provide a method for carrier switching, a device for carrier switching, and user equipment to solve the above technical problem.

In order to solve the above technical problem, embodiments of the present application provide a method for carrier switching, performed by user equipment, including:
determining a carrier switching location based on switching configurations of carriers in the bands, where the quantity of configured bands used for switching is greater than 2; and
performing carrier switching based on the determined carrier switching location.

Optionally, the determining the carrier switching location based on the switching configurations of the carriers in the bands includes:
determining switching configurations of the carriers in the bands used for switching; and
if the switching configurations of the carriers in the bands used for switching are the same, determining the carrier switching location based on priorities of the carriers in the bands used for switching.

Optionally, the determining the carrier switching location based on the priorities of the carriers in the bands used for switching:
determining a carrier with a lower priority from the carriers in the bands used for switching; and
determining the determined carrier with the lower priority as the carrier switching location.

Optionally, the determining the carrier switching location based on the priorities of the carriers in the bands used for switching includes:
determining a carrier with a low priority from the carriers in the bands used for switching; and
determining the determined carrier with the low priority as a carrier for performing carrier switching.

Optionally, the priorities of the carriers are determined in at least one of the following ways:
based on an index of each of the carriers;
based on a time at which information is transmitted on each of the carriers; or,
based on a type of information transmitted on each of the carriers.

Optionally, the index of each of the carriers is determined in at least one of the following ways:
based on a serving cell identity;
based on a physical cell identity; or,
based on an identity of a carrier used for dynamic uplink transmission channel switching configured by a high layer message.

Optionally, the determining the carrier switching location based on the switching configurations of the carriers in the bands includes:
determining a switching carrier set corresponding to the carriers in the different bands, where the switching carrier set includes a switching configuration, and the switching configuration is used to indicate a carrier for which a data loss is allowed; and
determining the carrier switching location based on the switching configuration corresponding to the switching carrier set used for switching.

Optionally, the determining the carrier switching location based on the switching configuration corresponding to the switching carrier set used for switching includes:
determining the carrier indicated by the switching configuration as the carrier switching location.

Optionally, the determining the carrier switching location based on the switching configurations of the carriers in the bands includes:
determining a switching carrier set corresponding to the carriers in the different bands, where the switching carrier set includes a switching configuration; and
determining a carrier indicated by the switching configuration as a carrier for performing carrier switching.

Optionally, the carriers in the different bands include three carriers or four carriers.

Optionally, the determining the carrier switching location based on the switching configurations of the carriers in the bands includes:
determining switching configurations of the carriers in the different bands, where the switching configurations include information about switching priorities corresponding to the different carriers; and
determining the carrier switching location based on the information about the switching priorities corresponding to the different carriers included in the switching configurations.

Optionally, the determining the carrier switching location based on the information about the switching priorities corresponding to the different carriers included in the switching configurations includes:
determining a switching priority corresponding to a first carrier used for switching and a switching priority corresponding to a second carrier used for switching, based on the information about the switching priorities corresponding to the different carriers included in the switching configurations; and
determining, a carrier with a lower switching priority from the first carrier and the second carrier, as the carrier switching location.

Optionally, the determining the carrier switching location based on the information about the switching priorities corresponding to the different carriers included in the switching configurations includes:
determining a switching priority corresponding to a first carrier used for switching and a switching priority corresponding to a second carrier used for switching, based on the information about the switching priorities corresponding to the different carriers included in the switching configurations; and
determining, a carrier with a low switching priority from the first carrier and the second carrier, as a carrier for performing carrier switching.

Optionally, the performing carrier switching based on the determined carrier switching location includes:
determining a first time, where the first time is determined based on a carrier switching time and a gap between switching carriers;
during the first time, no data transmission is performed on the carrier corresponding to the carrier switching location.

Optionally, the performing carrier switching based on the determined carrier switching location includes:
determining a first time, where the first time is determined based on a carrier switching time and a gap between switching carriers;
during the first time, no data transmission is performed on the carrier for performing the carrier switching.

Optionally, the method further includes:
determining a gap reference amount and a timing difference between the switching carriers; and
determining the gap between the switching carriers based on the gap reference amount and the timing difference.

Optionally, determination of the timing difference between the switching carriers includes:
determining the timing difference between the switching carriers based on a timing advance of the carrier before the switching and a timing advance of the carrier after the switching.

Embodiments of the present application also provide a user equipment, including a memory, a transceiver, and a processor;
the memory is configured to store a computer program; the transceiver is configured to receive and transmit data under control of the processor; and the processor is configured to read the computer program in the memory to perform following operations:
determining a carrier switching location based on switching configurations of carriers in the bands, where the quantity of configured bands used for switching is greater than 2; and
performing carrier switching based on the determined carrier switching location.

Optionally, the processor is configured to read the computer program in the memory to perform the following operation:
determining switching configurations of the carriers in the bands used for switching; and
if the switching configurations of the carriers in the bands used for switching are the same, determining the carrier switching location based on priorities of the carriers in the bands used for switching.

Optionally, the processor is configured to read the computer program in the memory to perform the following operation:
determining a carrier with a lower priority from the carriers in the bands used for switching; and
determining the determined carrier with the lower priority as the carrier switching location.

Optionally, the processor is configured to read the computer program in the memory to perform the following operation:
determining a carrier with a low priority from the carriers in the bands used for switching; and
determining the determined carrier with the low priority as a carrier for performing carrier switching.

Optionally, the priorities of the carriers are determined in at least one of the following ways:
based on an index of each of the carriers;
based on a time at which information is transmitted on each of the carriers; or,
based on a type of information transmitted on each of the carriers.

Optionally, the index of each of the carriers is determined in at least one of the following ways:
based on a serving cell identity;
based on a physical cell identity; or,
based on an identity of a carrier used for dynamic uplink transmission channel switching configured by a high layer message.

Optionally, the processor is configured to read the computer program in the memory to perform the following operation:
determining a switching carrier set corresponding to the carriers in the different bands, where the switching carrier set includes a switching configuration, and the switching configuration is used to indicate a carrier for which a data loss is allowed; and
determining the carrier switching location based on the switching configuration corresponding to the switching carrier set used for switching.

Optionally, the processor is configured to read the computer program in the memory to perform the following operation:
determining the carrier indicated by the switching configuration as the carrier switching location.

Optionally, the processor is configured to read the computer program in the memory to perform the following operation:
determining a switching carrier set corresponding to the carriers in the different bands, where the switching carrier set includes a switching configuration; and
determining a carrier indicated by the switching configuration as a carrier for performing carrier switching.

Optionally, the carriers in the different bands include three carriers or four carriers.

Optionally, the processor is configured to read the computer program in the memory to further perform the following operation:
determining switching configurations of the carriers in the different bands, where the switching configurations include information about switching priorities corresponding to the different carriers; and
determining the carrier switching location based on the information about the switching priorities corresponding to the different carriers included in the switching configurations.

Optionally, the processor is configured to read the computer program in the memory to perform the following operation:
determining a switching priority corresponding to a first carrier used for switching and a switching priority corresponding to a second carrier used for switching, based on the information about the switching priorities corresponding to the different carriers included in the switching configurations; and
determining, a carrier with a lower switching priority from the first carrier and the second carrier, as the carrier switching location.

Optionally, the processor is configured to read the computer program in the memory to perform the following operation:
determining a switching priority corresponding to a first carrier used for switching and a switching priority corresponding to a second carrier used for switching, based on the information about the switching priorities corresponding to the different carriers included in the switching configurations; and
determining, a carrier with a low switching priority from the first carrier and the second carrier, as a carrier for performing carrier switching.

Optionally, the processor is configured to read the computer program in the memory to further perform the following operation:
determining a first time, where the first time is determined based on a carrier switching time and a gap between switching carriers;
during the first time, no data transmission is performed on the carrier corresponding to the carrier switching location.

Optionally, the processor is configured to read the computer program in the memory to further perform the following operation:
determining a first time, where the first time is determined based on a carrier switching time and a gap between switching carriers;
during the first time, no data transmission is performed on the carrier for performing the carrier switching.

Optionally, the processor is configured to read the computer program in the memory to further perform the following operation:
determining a gap reference amount and a timing difference between the switching carriers; and
determining the gap between the switching carriers based on the gap reference amount and the timing difference.

Optionally, the processor is configured to read the computer program in the memory to perform the following operation:
determining the timing difference between the switching carriers based on a timing advance of the carrier before the switching and a timing advance of the carrier after the switching.

Embodiments of the present application also provide a device for carrier switching, applied to a user equipment, including:
a first determination unit, configured to determine a carrier switching location based on switching configurations of carriers in the bands, where the quantity of configured bands used for switching is greater than 2; and
an execution unit, configured to perform carrier switching based on the determined carrier switching location.

Embodiments of the present application also provide a computer readable storage medium, having a computer program stored thereon, and the computer program is configured to cause a processor to perform the above method.

The beneficial effects of the present application are as follows. Based on the solution of the present application, it is ensured that: when the quantity of the bands used for switching is greater than 2, determination of the carrier switching location can be achieved. In this way, smooth switching between the carriers is guaranteed and reliability of network communication is guaranteed.

In the solution, when the quantity of the configured bands used for switching is greater than 2, the switching configurations of the carriers are utilized to determine the carrier switching location, and then the carrier switching is performed. As a result, when the quantity of the configured bands used for switching is greater than 2, determination of the carrier switching location can be achieved. In this way, smooth switching between the carriers is guaranteed and reliability of network communication is guaranteed.

### BRIEF DESCRIPTION OF THE DRAWINGS

To better clarify technical solutions of embodiments of the present application or in the related technologies, drawings used in descriptions of the embodiments or in the related technologies are briefly introduced hereinafter. Apparently, the described drawings merely illustrate some embodiments of the present application. A person ordinary skilled in the art can obtain other drawings based on these drawings without any creative efforts.
FIG. 1 is a structural diagram of a network system applicable to embodiments of the present application;
FIG. 2 is a schematic diagram of switching between two carriers under a single-channel channel;
FIG. 3 is a schematic diagram of a scenario in which a carrier switching time is 35µs;
FIG. 4 is a schematic diagram of a scenario in which a carrier switching time is 140µs;
FIG. 5 is a schematic diagram of a scenario in which a carrier switching time is 140µs for a two-channel structure;
FIG. 6 is a schematic diagram of a scenario in which a gap between carriers is greater than or equal to a carrier switching time;
FIG. 7 is a schematic diagram of a scenario in which a gap between carriers is less than a carrier switching time;
FIG. 8 is a flow diagram of a method for carrier switching according to embodiments of the present application;
FIG. 9 is a schematic diagram of a carrier switching process in which priorities are determined based on a time sequence for transmitting signals;
FIG. 10 is a schematic diagram of a carrier switching process in which a carrier switching location is determined based on configuration information of a carrier pair;
FIG. 11 is a schematic diagram of a carrier switching process in which a carrier switching location is determined based on configured information about switching priorities;
FIG. 12 is a schematic diagram of a TA difference between different carriers;
FIG. 13 is a schematic diagram of units of a device for carrier switching according to embodiments of the present application;
FIG. 14 is a structural diagram of a user equipment according to embodiments of the present application.

### DETAILED DESCRIPTION

The technical solutions in embodiments of the present application are described clearly and completely in conjunction with drawings in the embodiments of the present application. Apparently, the described embodiments are merely a part of rather than all the embodiments of the present application. All other embodiments obtained by a person ordinary skilled in the art based on the embodiments of the present application without any creative efforts fall within the protection scope of the present application.

Terms such as "first" and "second" in the specification and the claims of the present application are used to distinguish similar objects and are not necessarily used to describe a specific order or sequence. It should be understood that the terms used in this way may be interchanged under appropriate circumstances, so that the embodiments of the present application described herein may be implemented in a sequence other than those illustrated or described herein. In addition, terms such as "including" and "having" and any variations thereof are intended to cover non-exclusive inclusion. For example, a process, method, system, product or device including a series of steps or units is not limited to the steps or units that are clearly listed and may include other steps or units that are not clearly listed or are inherent to the process, method, product, or device.

The term "and/or" in the embodiments of the present application describes an association relationship of associated objects, which indicates that there may be three types of relationships. For example, A and/or B may represent three situations: only A being included, both A and B being included, only B being included. The character "/" generally indicates that there is an "or" relationship between associated objects in front of it and behind it. The term "multiple" in the embodiments of the present application refers to two or more than two, and other words for expressing quantities are similar to it.

In embodiments of the present application, the expressions such as "exemplary" or "for example" are used to indicate an example, illustration, or description. Any embodiment or design solution described as "exemplary" or "for example" in the embodiments of the present application should not be construed as being preferred or advantageous over other embodiments or design solutions. Rather, the use of the expressions such as "exemplary" or "for example" is intended to present the relevant concepts in a specific manner.

Embodiments of the present application are described hereinafter in connection with the drawings. The method for carrier switching, the device for carrier switching, and the user equipment provided according to embodiments of the present application may be applied to a radio communication system. The radio communication system may be a system employing a fifth generation (5th Generation, 5G) mobile communication technology (hereinafter referred to as a 5G system), and it can be understood by those skilled in the art that the 5G NR system is only an example and is not a limitation.

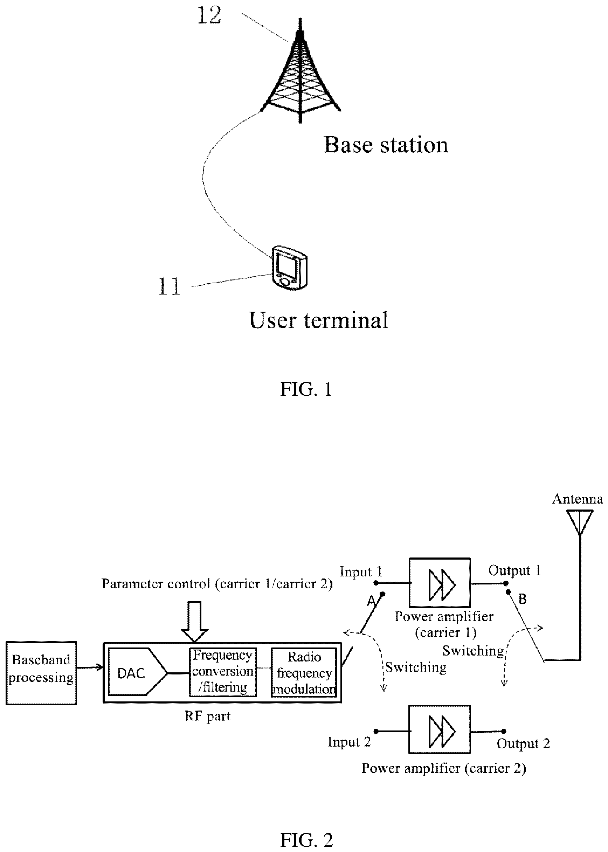

Reference is made to FIG. 1. FIG. 1 is a structural diagram of a network system to which embodiments of the present application may be applied. As shown in FIG.1, the network system includes a user terminal 11 and a base station 12, the user terminal 11 may be a user equipment (User Equipment, UE). For example, it may be a cellular phone, a tablet personal computer (Tablet Personal Computer), a laptop computer ( Laptop Computer), a personal digital assistant (personal digital assistant, PDA), a mobile Internet device (Mobile Internet Device, MID), or a wearable device (Wearable Device) or other terminal-side devices. It should be noted that in the embodiments of the present application, the specific type of the user terminal 11 is not limited in the embodiments of the present application. The above-mentioned base station 12 may be a base station of 5G or of a later version (e.g., gNB, or 5G NR NB), or a base station in other communication systems, or referred to as a node B. It should be noted that in the embodiments of the present application, a 5G base station is only taken as an example, and the specific type of the base station 12 is not limited.

First, based on the technical solutions provided in the present application, some technical terms that may be involved are introduced.

1.1. Support of selective transmission/concurrent transmission process for carriers in multiple bands (different bands), where the main object is to enhance a radio coverage capability of a cell.

For example, when a terminal is located at a center of a cell, the terminal is relatively close to a base station, and the terminal communicates using a carrier in a band with a relatively high frequency (e.g., carrier-1 configured by using 3.5GHz 2TX MIMO, with a bandwidth of 100MHz), in this way, a relatively high data transmission rate can be achieved. When the terminal is located at an edge of the cell, the terminal is farther away from the base station, and the terminal communicates using a carrier in a band with a relatively low frequency (e.g., carrier-1 of 2.1GHz, with a bandwidth of 20MHz); in the above, the terminal using a band with a relatively low frequency may also be referred to as the terminal using a band with a low frequency; in this way, a certain level of coverage quality can be achieved. When the terminal is located in the middle of the cell, the terminal is not too far from the base station, and the terminal can simultaneously utilize carriers in two frequency ranges (e.g., carrier-1 of 2.1GHz and carrier-2 of 3.5GHz) for communication, in this way, spectral resources can be effectively utilized and user experience is enhanced; at this time, the terminal is considered as operating in a concurrent uplink mode.

### 1.2. Switching process between transmission carriers

For cost consideration of a terminal, some elements are shared between different carriers to reduce manufacturing costs. However, a switching time and a switching location need to be taken into account. Currently, uplink switching between carriers in two different bands is supported. A simplified terminal architecture model and a switching process are illustrated in FIG. 2.

As shown in FIG. 2, during uplink communication of the terminal, switching between carriers may occur, which is specifically as follows:
in a case of transmitting a signal or channel on carrier 1, values related to carrier 1 are adopted as control parameters for Radio Frequency (RF), the output point A of the RF part switches to input point 1 of a power amplifier of carrier 1, and output 1 of the power amplifier switches to antenna B;
in a case of transmitting a signal or channel on carrier 2, values related to carrier 2 are adopted as control parameters for the RF , the output point A of the RF part switches to input point 2 of a power amplifier of carrier 2, and output 2 of the power amplifier switches to antenna B.

### 1.3 Switching time of transmission carriers

In a case of performing the above switching of carrier transmissions, during the carrier switching, the terminal needs to terminate transmission. That is, a carrier switching time (Switching Time, which may also be referred to as switching duration or switching period) is required. The switching time may be expressed in terms of time, such as {35µs, 140µs, 210µs}, or in terms of symbol count. For example, in a case that a subcarrier spacing (Subcarrier Spacing, SCS) equals 30kHz, the switching symbol count may be represented as: {1, 4, 6} symbol(s).

Furthermore, the value of the length of the switching time depends on the actual structure of the terminal. Simply put, the more elements shared between different carriers, the longer the switching time required, and vice versa. The analysis is as follows.

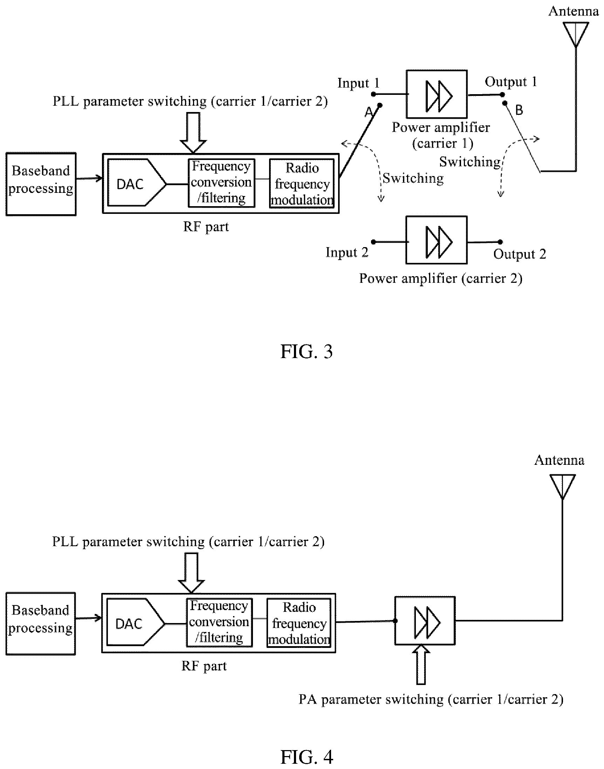

As illustrated in FIG. 3 (as shown in FIG. 3, in the terminal structure: power amplifiers (Power Amplifier, PA) for carrier 1 and carrier 2 are independent; one RF part is shared; the carrier switching time is mainly spent on phase locked loop (Phase Locked Loop, PLL) parameter switching, which is approximately 35 microseconds) and FIG. 4 (as shown in FIG. 4, in the terminal structure: one power amplifier (PA) is shared; one radio frequency (Radio Frequency, RF) part is shared; the carrier switching time: approximately 140µs for power amplifier (PA) parameter switching, approximately 35µs for phase locked loop (PLL) parameter switching, where the larger value of approximately 140µs is taken), in a scenario where SCS=30KHz, a UE with a low capability has a switching time (Switching Time) of 6 symbols, and a UE with a high capability has a switching time (Switching Time) of 1 symbol.

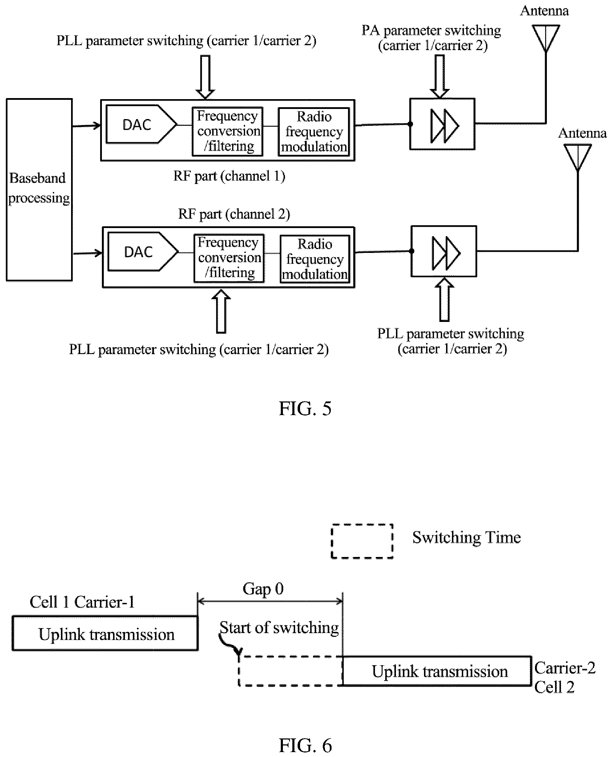

The single-channel (1Tx) switching (1Tx-1Tx) is illustrated in FIG. 3 and FIG. 4, and in actual operation, switching for dual channels (2TX-2TX) is also supported. FIG. 5 (as shown in FIG. 5, in the terminal structure (dual-channel): the power amplifier (PA) is shared, and the RF part is shared; the carrier switching time: approximately 140µs for power amplifier (PA) parameter switching, approximately 35µs for phase locked loop (PLL) parameter switching, where the larger value of approximately 140µs is taken) illustrates a structure of switching for dual channels.

### 1.4 Determination of a carrier switching location

### Step 1: a carrier switching location is indicated through RRC (whether it is on carrier 1 or carrier 2)

The RRC configuration information may be as follows:

```
           Uplink Transmission Switching Configuration (UplinkTxSwitching) {
           switching location (uplinkTxSwitchingPeriodLocation) BOOLEAN,
           identity of carrier used for dynamic uplink transmission channel switching
 (uplinkTxSwitchingCarrier-r16) ENUMERATED {carrier 1, carrier2}
            }
```

In the above, the identity of the carrier used for dynamic uplink transmission channel switching (uplinkTxSwitchingCarrier-r16) is of an enumerated type (ENUMERATED), which defines a carrier index (carrier 1 or carrier 2) for performing carrier switching (or of the currently configured cell). Usually, the carriers between which switching is to be performed need to belong to different bands.

The switching location (uplinkTxSwitchingPeriodLocation) is of a Boolean type (BOOLEAN), which indicates whether the carrier switching occurs in the current cell. For example, a value of 1 indicates that the carrier switching occurs in the current cell, that is, if the carrier corresponding to the current cell is carrier 1, then it is determined that data on carrier 1 may be lost during the carrier switching process; a value of 0 indicates that the carrier switching does not occur in the current cell, that is, if the carrier corresponding to the current cell is carrier 1, then it is determined that data on carrier 1 may not be lost during the carrier switching process.

It should be noted that, the above RRC configuration information becomes effective (i.e., be triggered to be executed) only when a gap (GAP) between the switching carriers is less than the carrier switching time. In other words, the UE determines, based on the RRC configuration information, a carrier on which the data signal is to be interrupted, to use it for carrier switching (as can be seen in Example 1 in the following).

Step 2: the carrier switching location is determined based on the configuration information in Step 1 and the gap between information transmissions on the two carriers.

When the gap between signals/channels transmitted on carrier 1 and carrier 2 (i.e., gap between the carriers, which may be represented by GapO) is greater than or equal to the carrier switching time (Switching Time), the carrier switching process occurs before the carrier that is switched to, that is, data transmission on the carrier that is switched to is started immediately upon completion of the switching process. In this case, data on both carriers (carrier 1 and carrier 2) can be transmitted normally without interruption.

When the gap between signals/channels transmitted on carrier 1 and carrier 2 (GapO) is less than the carrier switching time (Switching Time), and in a case that the carrier switching location defined in Step 1 is on the carrier that is before the switching (e.g., carrier 1), then, for a period from a first time point to a start time when signals start to be transmitted on carrier 2, it is determined that data transmission will not be performed on carrier 1, where an end time for transmitting signals/channels on the carrier that is before the switching is used as a baseline for determining the first time point. The duration corresponding to the first time point is a difference between the carrier switching time and the gap (GAP) between the switching carriers. In other words, on the carrier that is before the switching (e.g., carrier 1), signal/channel transmission is halted for a duration of a first time (the length is Switching Time - GapO) that is from time point T to the end time.

If the carrier switching location defined in Step 1 is on the carrier that is after the switching (e.g., carrier 2), then, for a duration of a first time that is calculated by using a start time, from which signals start to be transmitted on carrier 2, as a baseline, data transmission will not be performed on carrier 2. That is, on the carrier that is after the switching (e.g., carrier 2), signal/channel transmission is halted for a duration of a first time (the length is Switching Time - GapO) that is calculated by using a start time, from which signals start to be transmitted on carrier 2, as a baseline.

### Example 1

It is assumed that in Step 1, after configuration through high layer signaling, cell 1 corresponds to carrier-1, and cell 2 corresponds to carrier-2.

The switching location (uplinkTxSwitchingPeriodLocation) is configured as carrier-1, i.e., the parameter uplinkTxSwitchingPeriodLocation corresponding to cell 1 is set to TRUE.

As shown in FIG. 6, for scenario-1, the gap (GapO) between transmissions of signals/channels on carrier 1 and carrier 2 is greater than or equal to Switching Time, hence, the switching between carriers is completed immediately before signals/channels on the carrier that is switched to (carrier 2).

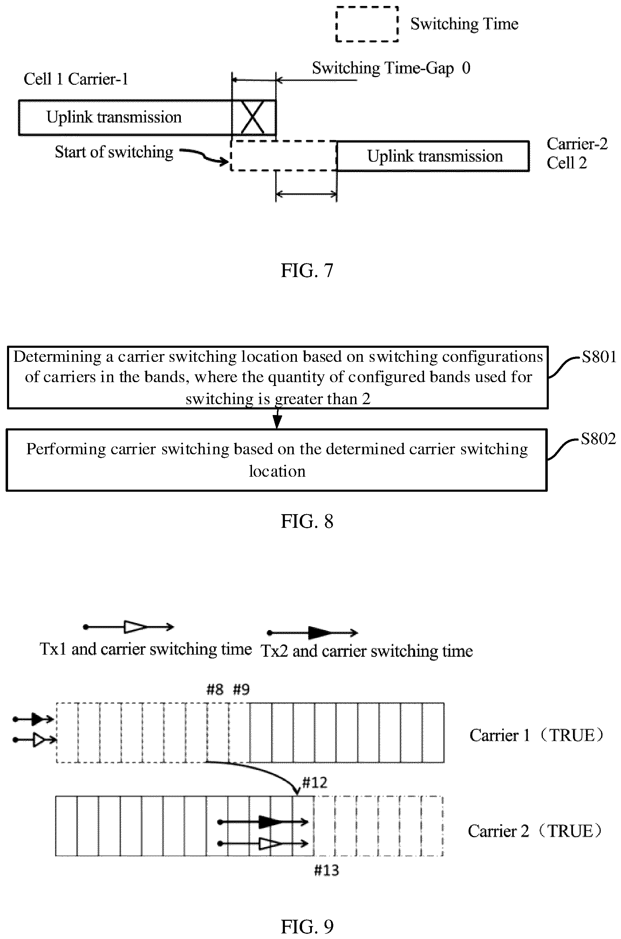

As shown in FIG. 7, for scenario-2, the gap (GapO) between transmissions of signals/channels on carrier 1 and carrier 2 is less than Switching Time, and the carrier switching location configured through high layer signaling is on carrier-1. The carrier switching begins before the end of transmitting of signals/channels on carrier-1, a tail duration of (Switching Time - GapO) is occupied, and the carrier switching is completed immediately before signal/channel transmission on carrier-2. In addition, due to execution of the carrier switching, the terminal does not transmit signals/channels during the tail duration, which is (Switching Time - Gap0), of signal/channel transmission on carrier-1.

Based on the analysis, embodiments of the present application provide a method for carrier switching, a device for carrier switching, and a user equipment, to address the issue that the existing method for determining the carrier switching location for switching between carriers in two bands is not applicable to a situation of switching among carriers in at least three bands.

Methods and devices are based on the same application concept. Since the principles of solving problems in methods and devices are similar, for implementations of the devices and the methods, reference can be made to each other, the repetition of which is not described again herein.

As shown in FIG. 8, embodiments of the present application provide a method for carrier switching, performed by a user equipment, which includes the following steps.

Step S801 includes: determining a carrier switching location based on switching configurations of carriers in the bands, where the quantity of configured bands used for switching is greater than 2.

It should be noted that the switching configurations in the embodiments of the present application refer to configuration parameters used for determining the carrier switching location in the carrier switching process, and the switching configurations may be priorities of the carriers or may be switching configurations.

The switching configurations include one or more of: priorities of the carriers, or, switching configuration(s). In another embodiment of the present application, the switching configuration(s) herein include a switching configuration value corresponding to each carrier in a switching carrier set, where the switching configuration value may be 1 or 0; or, a switching configuration priority corresponding to each carrier.

The carrier switching location may be understood as a carrier for performing carrier switching, i.e. a carrier on which carrier switching is performed. The carrier for performing carrier switching may be referred to as a carrier in the switching process.

Optionally, the switching configuration(s) may be switching configuration(s) configured for a switching carrier set after switching carrier set division is performed for carriers in more than two bands. In this case, the switching configuration(s) may be implemented in the following way: one switching configuration is configured for each carrier in the switching carrier set, and this switching configuration is used to indicate whether or not the carrier is configured as a carrier switching location; or, the switching configuration(s) may be implemented in the following way: one switching configuration is configured for the switching carrier set, and this carrier switching indication may indicate explicitly which carrier is configured as the carrier switching location.

Optionally, the switching configuration may be a value of a switching priority configured for each carrier, and the switching priority of the each carrier may be determined based on this value.

Step S802 includes: performing carrier switching based on the determined carrier switching location.

It should be noted that the carrier switching location refers to a carrier with loss of data. That is, during the carrier switching process, in order to reserve time for the carrier switching, it is instructed that data transmission needs to be stopped for a period of time on the carrier determined to be the carrier switching location, that is, data transmitted on the carrier determined to be the carrier switching location is incomplete data (i.e., there is a loss in data on the carrier determined to be the carrier switching location).

It should be noted that embodiments of the present application are based on a scenario of a switching uplink mode (That is, the terminal can only transmit signal/channel data on a carrier (e.g., carrier-1) in one band (e.g., band-1). In a case that signal/channel data needs to be transmitted on a carrier (e.g., carrier-2) in another band (e.g., band-2), transmission on band-1 needs to be stopped).

The specific implementation of step S801 is described in detail hereinafter based on different switching configurations.

### First, switching configurations being priorities of carriers

Specifically, in such a case, step S801 is implemented as follows:
determining switching configurations of the carriers in the bands used for switching; and
if the switching configurations of the carriers in the bands used for switching are the same, determining the carrier switching location based on priorities of the carriers in the bands used for switching.

It should be noted that in such a case, the existing switching configuration is still used, i.e., the switching configuration may be understood as being the uplinkTxSwitchingPeriodLocation mentioned in the background. Since the quantity of bands used for scheduling by the base station is greater than 2, using the existing manner for switching configuration may result in the fact that switching configurations of the carriers corresponding to different bands may be the same. When the two carriers with the same switching configurations are a carrier before the switching and a carrier after the switching that are indicated through scheduling of the base station, the carrier switching location cannot be determined in this situation according to the existing solution. Therefore, in another embodiment of the present application, in a case that the switching configurations of the carrier before the switching and the carrier after the switching are the same (specifically, the switching configurations of the carrier before the switching and the carrier after the switching being the same may be understood as uplinkTxSwitchingPeriodLocation corresponding to the carrier before the switching and uplinkTxSwitchingPeriodLocation corresponding to the carrier after the switching are both TRUE, or are both FLASE), the determination of the carrier switching location is performed based on the priorities of the carriers. In this way, the carrier switching location is determined based on the priorities of the carriers. As a result, in a case that the switching configurations of the carrier before the switching and the carrier after the switching are the same, it is guaranteed that the user equipment is able to determine the carrier switching location, which ensures that the network side and the terminal have the same understanding of the carrier switching location, so as to facilitate smooth execution of the carrier switching.

Optionally, in such a case, the implementation of determining the carrier switching location based on the priorities of the carriers in the bands used for switching may be as follows:
determining a carrier corresponding to the one with a lower priority from the carriers in the bands used for switching; and
determining the determined carrier corresponding to the one with the lower priority as a carrier for performing carrier switching.

The above embodiment may also be understood as: optionally, the determining the carrier switching location based on the priorities of the carriers in the bands used for switching includes:
determining a carrier with a low priority from the carriers in the bands used for switching; and
determining the determined carrier with the low priority as a carrier for performing carrier switching.

It should be noted that, after determining the carrier corresponding to the one with the lower priority from the carriers in the bands used for switching as the carrier switching location, a first time needs to be determined. During the first time, no data transmission is performed on the carrier corresponding to the carrier switching location. The first time is determined based on a carrier switching time and a gap between the switching carriers. Optionally, the first time is equal to the carrier switching time minus the gap between the switching carriers. In this way, it can be ensured that data transmission on the carrier with a higher priority is not affected.

The above manner may also be understood as: determining a first time, where the first time is determined based on a carrier switching time and a gap between switching carriers; during the first time, no data transmission is performed on the carrier for performing the carrier switching.

It should be noted that the function of the carrier switching location described in the embodiments of the present application is as follows: during the first time at the tail (the one with the lower priority is the carrier before the switching) or the head (the one with the lower priority is the carrier after the switching) of the carrier corresponding to the one with the lower priority among the carriers in the bands used for the switching, data transmission is stopped.

Optionally, in such a case, the implementation of determining the carrier switching location based on the priorities of the carriers in the bands used for switching may be as follows:
determining a carrier corresponding to the one with a low priority from the carriers in the bands used for switching; and
determining the determined carrier corresponding to the one with the low priority as the carrier switching location.

It should be noted that, after determining the carrier corresponding to the one with the low priority from the carriers in the bands used for switching as the carrier switching location, a first time needs to be determined. During the first time, no data transmission is performed on the carrier corresponding to the carrier switching location. The first time is determined based on a carrier switching time and a gap between the switching carriers. Optionally, the first time is equal to the carrier switching time minus the gap between the switching carriers. In this way, it can be ensured that data transmission on the carrier with a higher priority is not affected.

It should be noted that the function of the carrier switching location described in the embodiments of the present application is as follows: during the first time at the tail (the one with the low priority is the carrier before the switching) or the head (the one with the low priority is the carrier after the switching) of the carrier corresponding to the one with the low priority among the carriers in the bands used for the switching, data transmission is stopped.

It should be noted that the expression of "the one with a low priority" in the present application is a relative concept. That is, when two carriers are included, one of the two carriers which has a lower priority may be referred to as the one with a low priority; and when three carriers are included, two carriers, which have lower priorities, of the three carriers may be referred to as the ones with low priorities, and the one with a low priority in the above may also be referred to as the one with a lower priority.

Preferably, in this embodiment of the present application, in a case that the gap between the carriers in the bands used for switching is less than the switching time, a carrier corresponding to the one with a lower priority is determined from the carriers in the bands used for switching; and the determined carrier corresponding to the one with the lower priority is determined as the carrier switching location.

Preferably, in this embodiment of the present application, in a case that the gap between the carriers in the bands used for switching is less than the switching time, a carrier corresponding to the one with a low priority is determined from the carriers in the bands used for switching; and the determined carrier corresponding to the one with the low priority is determined as the carrier switching location.

Optionally, the priorities of the carriers are determined in at least one of the following ways K111 to K113.

Kill, determination is based on an index of each of the carriers.

It should be noted that the priorities of the carriers may be determined by utilizing a principle that the larger the index of the carrier, the lower the priority; or, the priorities of the carriers may be determined by utilizing a principle that the larger the index of the carrier, the higher the priority.

Optionally, the index of each of the carriers is determined in at least one of the following ways K1111 to K1113.
K1111, determination is based on a serving cell identity;
It should be noted that the serving cell identity may be a serving cell identity document (Identity document, ID) (SCell Index), and the serving cell identity may be configured through high layer signaling, which is used for performing identification of a secondary serving cell and a primary serving cell, with a range of 1 to 31.

K1112, determination is based on a physical cell identity.

It should be noted that the physical cell identity may be a physical cell ID (PhysCellId), and the physical cell identity is determined by searching for a primary synchronization signal (Primary Synchronization Signal, PSS) and a secondary synchronization signal (Secondary Synchronization Signal, SSS), or may be configured through high layer signaling, which is used for indicating scrambling and identification of a physical signal, with the range of 0 to 1007.

K1113, determination is based on an identity of a carrier used for dynamic uplink transmission channel switching configured by a high layer message.

It should be noted that in such a case, an identity may be separately provided for the carrier used for dynamic uplink transmission channel switching. Based on this identity, the index of the carrier can be determined.

For example, in a case of configuring a carrier parameter to which a cell belongs, i.e., the uplink transmission channel switching carrier (uplinkTxSwitchingCarrier), it is configured as one of {carrier1, carrier2, carrier3} when uplink carrier switching of three bands is supported, and it is configured as one of {carrier1, carrier2, carriers, carrier4} when uplink carrier switching of four bands is supported. That is, carrier1, carrier2, carrier3, carrier4 are the indices of the carriers, for example, the priority of carrier1 is higher than that of carrier2, the priority of carrier2 is higher than that of carrier3, and so on; or, the priority of carrier1 is lower than that of carrier2, the priority of carrier2 is lower than that of carrier3, and so on.
K112, determination is based on a time at which information is transmitted on each of the carriers;
It should be noted that the priorities of the carriers may be determined by utilizing a principle that the later the time at which the information is transmitted on the carrier, the higher the priority; or, the priorities of the carriers may be determined by utilizing a principle that the later the time at which the information is transmitted on the carrier, the lower the priority.

For example, as shown in FIG. 9, it is assumed that carrier switching location indications of both carrier 1 and carrier 2 are configured as TRUE, and that the carrier before the carrier switching has a low priority. The terminal starts transmission channel switching on symbol 8 of carrier 1, and the switching is completed on symbol 12. In this case, data on symbol 8 and symbol 9 of carrier 1 cannot be sent, and data on carrier 2 can be sent normally (from symbol 13).
K113, determination is based on a type of information transmitted on each of the carriers;
It should be noted that the type of the transmitted information in the embodiments of the present application may include control information, data information, or the like. In this case, the priorities of the carriers may be determined by utilizing a principle that a priority of the control information is higher than a priority of the data information (i.e., a priority of a physical uplink control channel (Physical Uplink Control Channel, PUCCH) for transmitting the control information is higher than a priority of a physical uplink shared channel (Physical Uplink Shared Channel, PUSCH) for transmitting data), that is, in this case the priority of the carrier for transmitting the control information is higher than the priority of the carrier for transmitting the data information.

Optionally, the priorities of the carriers in the bands used for switching may be determined by using only one of K111-K113, or, the priorities of the carriers in the bands used for switching may be determined by utilizing two or three items thereof. For example, when K113 is utilized to determine the priorities, if types of the information transmitted on the two carriers in the bands used for switching are the same, the priorities of the carriers in the bands used for switching may be determined by further utilizing K112.

Optionally, it should be noted that in the above the first time is set as being on the same carrier, and optionally, in a case that the switching configurations of the carriers in the bands used for switching are the same, the first time may be spread equally over the two carriers in the bands used for switching, i.e., no data transmission is performed on the last few symbols of the carrier before switching and on the first few symbols of the carrier after switching.

Second, switching configurations being switching configuration(s), where the switching configuration(s) are used to indicate the carrier that is configured as the carrier switching location

Specifically, in such a case, step S801 is implemented as follows:
determining a switching carrier set corresponding to the carriers in the different bands, where the switching carrier set includes switching configuration(s); and the switching configuration(s) are used to indicate a carrier for which a data loss is allowed;
determining the carrier switching location based on the switching configuration(s) corresponding to the switching carrier set used for switching.

It should be noted that such a situation is for a case of three carriers or more than three carriers, and the new way of determining the carrier switching location is proposed to avoid a circumstance where the switching configurations of two carriers in the bands used for switching are the same. In this way, it is ensured that the network side and the terminal have a same understanding of the carrier switching location, which facilitates smooth execution of carrier switching.

It should be noted that in such a case, an optional implementation of determining the carrier switching location based on the switching configuration(s) corresponding to the switching carrier set used for switching is as follows:
determining the carrier indicated by the switching configuration(s) as the carrier switching location.

The above manner may also be understood as: optionally, the determining the carrier switching location based on the switching configurations of the carriers in the bands includes:
determining a switching carrier set corresponding to the carriers in the different bands, where the switching carrier set includes switching configuration(s); and
determining a carrier indicated by the switching configuration(s) as a carrier for performing carrier switching.

Optionally, the carriers in the different bands include three carriers or four carriers.

It should be noted that, in such a case, the carriers in at least three bands are divided into multiple switching carrier sets. Typically, each switching carrier set includes two carriers, which may also be understood as a switching carrier set being a switching carrier pair; and a carrier switching location is determined for each pair of carriers, where carriers in each pair can be switched with each other.

For example, in a case that the terminal transmits data on the carrier 1 in the band 1, when the network side indicates that carrier switching is required, configuration information of switching needs to be indicated to the terminal. Specifically, the configuration information is used to indicate the carriers and the switching configuration(s) included in the switching carrier set, the terminal determines, based on the configuration information, the carrier indicated by the switching configuration(s) as the carrier switching location, and no data transmission is performed during a portion of the time on the carrier.

It should be noted that the above configuration information of switching may be configured for the terminal by the network side; or, the switching carrier set, and the switching configuration(s) of the corresponding switching carrier set, may be determined through an interface protocol between the network and the terminal.

It should be noted that, the switching configuration(s) may be implemented in the following way: a switching configuration is configured for each carrier in the switching carrier set; or, a switching configuration is only configured for a carrier, which is set as a carrier switching location (i.e., where data loss is allowed), in the switching carrier set.

For example, a case where each switching carrier set includes two carriers is taken as an example, four carriers in four bands are divided into multiple switching carrier pairs, and a carrier switching location is determined for each pair of carriers. For example, the base station configures multiple switching carrier pairs by sending the following configuration information:

```
           Uplink transmission switching configuration (UplinkTxSwitching) {
           Switching location pair list (uplinkTxSwitchingPeriodLocation-pairlist)
           SEQUENCE (SIZE (1..3)) OF SwitchingcarrierPair;
           Identity of configured carrier used for dynamic uplink transmission channel
 switching (uplinkTxSwitchingCarrier-r18) ENUMERATED {carrier1, carrier2, carriers,
 carrier4,}
            }
```

It should be noted that the identity (uplinkTxSwitchingCarrier-r18) of the configured carrier used for dynamic uplink transmission channel switching is used to identify a carrier identity corresponding to the currently configured cell; SwitchingcarrierPair is used to indicate a carrier switching pair that is combined with the currently configured carrier , and the included content may be in the following forms:

### Form 1:

SwitchingcarrierPair includes:
Switchingpair-carrier-1: carrier 1 of the switching carrier pair;
SwitchingPeriodLocation-1: switching location of carrier 1 of the switching carrier pair;
Switchingpair-carrier-2: carrier 2 of the switching carrier pair;
SwitchingPeriodLocation-2: a switching location of carrier 2 of the switching carrier pair.
Switchingpair-carrier-1 and Switchingpair-carrier-2 are indices of two different carrier, and the index value is one of {carrier1, carrier2, carriers, carrier4};
A case where 4 carriers are included is as an example. According to the principle of permutation and combination calculation, 3 carrier pairs may be formed for 1 specific carrier. Carriers in each pair can be switched with each other. A case where the identity of the configured carrier used for dynamic uplink transmission channel switching is carrier-1 is taken as an example, where the correspondence between the carrier pair combinations and the switching location configuration indications is shown in Table 1:

**Table 1 Correspondence between carrier pair combinations and switching location configuration indications**

| Combination number | Carrier pair combination (Switchingpair-carrier-1, Switchingpair-carrier-2) | Switching location configuration of carrier (Switchingpair-carrier-1, Switchingpair-carrier-2) |
|---|---|---|
| 1 | {carrier-1, carrier-2} | {TRUE,FALSE} |
| 2 | {carrier-1, carrier-3} | {TRUE,FALSE} |
| 3 | {carrier-1, carrier-4} | {TRUE,FALSE} |

It should be noted that in this case, one switching configuration is configured for each carrier in each carrier pair. When carrier switching is to be performed, the user equipment determines the carrier switching location based on the defined switching configurations.

### Form 2:

Switching carrier Pair includes:
Switchingpair-carrier-2: carrier 2 of switching carrier pair;
SwitchingPeriodLocation-2: switching location of carrier 2 of switching carrier pair.
Index value of Switchingpair-carrier-2 is one of {carrier1, carrier2, carriers, carrier4}; in the configuration, only the switching location of the Switchingpair-carrier-2 is identified; on the terminal side, the carrier switching location may be determined based on SwitchingPeriodLocation-2;
For example, if SwitchingPeriodLocation-2 is configured as FASLE, it indicates that the carrier switching location is not on Switchingpair-carrier-2, and the carrier switching location is in the currently configured cell;
For example, if SwitchingPeriodLocation-2 is configured as TRUE, it indicates that the carrier switching location is on Switchingpair-carrier-2;

A case where 4 carriers are included is as an example. According to the principle of permutation and combination calculation, 3 carrier pairs may be formed for 1 specific carrier. Carriers in each pair can be switched with each other. A case where the identity of the configured carrier used for dynamic uplink transmission channel switching is carrier-1 (currently configured cell) is taken as an example, where the correspondence between the carrier pair combinations and the switching location configuration indications is shown in Table 2:

**Table 2 Correspondence between carrier pair combinations and switching location configuration indications**

| Combination number | Carrier pair combination (currently configured cell, Switchingpair-carrier-2) | Switching location configuration of carrier Switchingpair-carrier-2) |
|---|---|---|
| 1 | {carrier-1, carrier-2} | { FALSE} (note: the switching location is on carrier-1) |
| 2 | {carrier-1, carrier-3} | { FALSE}(note: the switching location is on carrier-1) |
| 3 | {carrier-1, carrier-4} | {TRUE }(note: the switching location is on carrier-4) |

It should be noted that in this case, one switching configuration is configured for one carrier in each carrier pair, and the terminal uses the configuration of one carrier to infer the configuration value of the other carrier. When carrier switching is to be performed, the user equipment determines the carrier switching location based on the defined switching configuration.

It should be noted that, after the carrier indicated by the switching configuration(s) is determined as the carrier switching location, a first time needs to be determined. During the first time, no data transmission is performed on the carrier corresponding to the carrier switching location. The first time is determined based on a carrier switching time and a gap between the switching carriers. Optionally, the first time is equal to the carrier switching time minus the gap between the switching carriers. That is, data transmission is stopped during a portion of the time on the carrier with a lower priority, to perform carrier switching. In this way, it can be ensured that data transmission on the carrier with a higher priority is not affected. In the above, the carrier with a lower priority may also be referred to as the carrier with a low priority.

It should be noted that the function of the carrier switching location described in the embodiments of the present application is as follows: during the first time at the tail (the carrier indicated by the switching configuration(s) is a carrier before the switching) or the head (the carrier indicated by the switching configuration(s) is a carrier after the switching) of the carrier indicated by the switching configuration(s), data transmission is stopped.

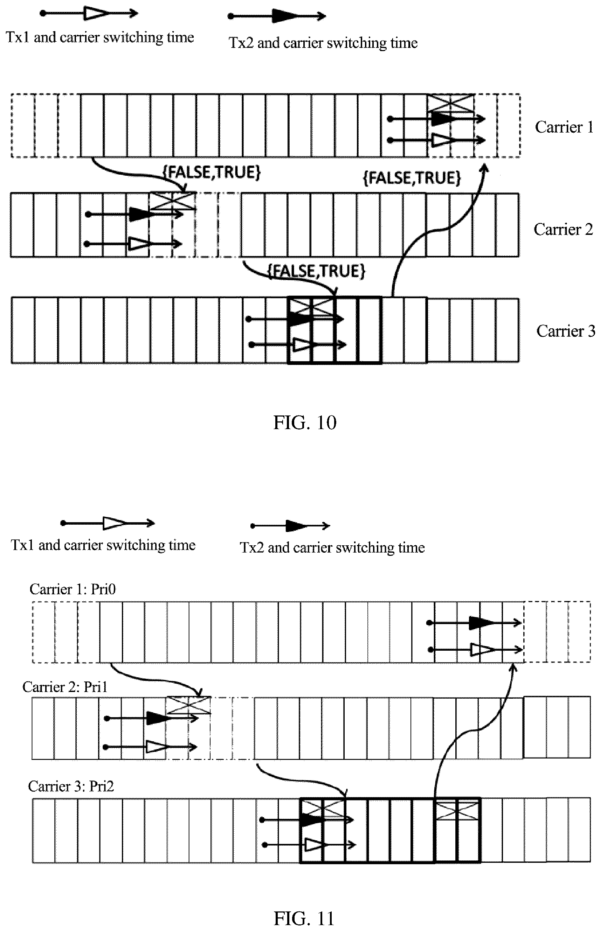

For example, as shown in FIG. 10, it is assumed as follows.

For carrier pair {carrier-1, carrier-2}, carrier-1 is correspondingly configured as FALSE, and carrier-2 is correspondingly configured as TRUE, i.e., when switching between carrier-1 and carrier-2 occurs, the carrier switching occurs on carrier-2.

For carrier pair {carrier-2, carrier-3}, carrier-2 is correspondingly configured as FALSE, and carrier-3 is correspondingly configured as TRUE, i.e., when switching between carrier-2 and carrier-3 occurs, the carrier switching occurs on carrier-3.

For carrier pair {carrier-1, carrier-3}, carrier-3 is correspondingly configured as FALSE, and carrier-1 is correspondingly configured as TRUE, i.e., when switching between carrier-1 and carrier-3 occurs, the carrier switching occurs on carrier-1.

In the above carrier switching processes, when the gap Gap0 between the carriers is less than the carrier switching time (Switching Time) of the carriers: for the switching between {carrier-1, carrier-2}, the switching occurs on carrier-2, i.e., in the duration of SwitchingTime-Gap0, data cannot be transmitted on carrier-2.

The above content indicates that, as an optional implementation, the carriers in the different bands include three carriers or four carriers.

Third, switching configurations being switching configurations, where the switching configurations are used to indicate information about switching priorities

Specifically, in such a case, step S801 is implemented as follows:
determining switching configurations of the carriers in the different bands, where the switching configurations include information about switching priorities corresponding to the carriers; and
determining the carrier switching location based on the information about the switching priorities corresponding to the different carriers included in the switching configurations.

It should be noted that, in this case, information about the switching priorities are assigned for the carriers, and the carrier switching location is determined based on the information about the switching priorities corresponding to the different carriers, so as to ensure the smooth execution of carrier switching.

It should be noted that an optional implementation of determining the carrier switching location based on the information about the switching priorities corresponding to the different carriers included in the switching configurations is as follows:
determining a switching priority corresponding to a first carrier used for switching and a switching priority corresponding to a second carrier used for switching, based on the information about the switching priorities corresponding to the different carriers included in the switching configurations;
determining, a carrier with a lower switching priority from the first carrier and the second carrier, as the carrier switching location.

The above manner may also be understood as: optionally, the determining the carrier switching location based on the information about the switching priorities corresponding to the different carriers included in the switching configurations includes:
determining a switching priority corresponding to a first carrier used for switching and a switching priority corresponding to a second carrier used for switching, based on the information about the switching priorities corresponding to the different carriers included in the switching configurations; and
determining, a carrier with a low switching priority from the first carrier and the second carrier, as a carrier for performing carrier switching.

It should be noted that, in this case, values of different switching priorities are configured for different carriers respectively, that is, a numerical parameter, which is of a Boolean type, of uplinkTxSwitchingPeriodLocation is configured with multiple values, and different parameter values represent different switching priorities, e.g., configured with four values having different levels, i.e., P={Pri0,Pri1,Pri2 ,Pri3}, where the priorities in a descending order are Pri0>Pri1>Pri2>Pri3. The base station may configure one of these values for each carrier.

Preferably, when the gap Gap0 between the carrier before the switching and the carrier after the switching is less than Switching Time, the carrier switching location is determined based on the values of respective switching priorities of the carrier before the switching and the carrier after the switching.

For example, the base station configures multiple switching carrier pairs by transmitting the following configuration information:

```
           Uplink transmission switching configuration (UplinkTxSwitching) {
           Switching location (uplinkTxSwitchingPeriodLocation-R18) ENUMERATED
 {p0,p1,p2,p3}
           Carrier to which configured cell belongs (uplinkTxSwitchingCarrier-r18)
   ENUMERATED {carrier1, carrier2, carrier3, carrier4,}
            }
```

A case where 4 carriers in 4 bands are included is as an example, where a carrier switching location priority corresponding to each carrier is as shown in Table 3:

**Table 3 Correspondence regarding switching priority of each carrier**

| Combination number | Carrier identity | Switching priority corresponding to carrier |
|---|---|---|
| 1 | carrier-1 | PriO |
| 2 | carrier-2 | Pri 1 |
| 3 | carrier-3 | Pri 2 |
| 4 | carrier-4 | Pri 3 |

It is assumed that the carrier switching occurs on a carrier with a low priority, and the above priorities are Pri 0, Pri 1, Pri 2, Pri 3 in a descending order, where the values increases sequentially.

It should be noted that, after the carrier with the lower switching priority from the carrier before the switching and the carrier after the switching is determined as the carrier switching location, a first time needs to be determined. During the first time, no data transmission is performed on the carrier corresponding to the carrier switching location. The first time is determined based on a carrier switching time and a gap between the switching carriers. Optionally, the first time is equal to the carrier switching time minus the gap between the switching carriers. That is, data transmission is stopped for a portion of the time on the carrier with a lower switching priority, to perform carrier switching. In this way, it can be ensured that data transmission on the carrier with a higher priority is not affected.

It should be noted that the function of the carrier switching location described in the embodiments of the present application is as follows: during the first time at the tail (the one with the lower switching priority is the carrier before the switching) or the head (the one with the lower switching priority is the carrier after the switching) of the carrier with the lower switching priority, data transmission is stopped.

In the above, a lower switching priority may also be understood as a low switching priority.

For example, as shown in FIG. 11, it is assumed that the configuration information is as follows:
for carrier carrier-1, the corresponding carrier switching location priority is set to Pri 0;
for carrier carrier-2, the corresponding carrier switching location priority is set to Pri 1;
for carrier-3, the corresponding carrier switching location priority is set to Pri 2.

In the above carrier switching processes, when Gap0 is smaller than SwitchingTime: for the switching between {carrier-1, carrier-2}, the switching occurs on carrier-2 as priority Pri 0 is higher than priority Pri 1,, i.e., in the duration of Gap0-SwitchingTime, data on carrier-2 cannot be transmitted. For switching of other carriers, details thereof can be obtained by analogy, which will not be illustrated herein.

Optionally, in order to accurately perform carrier switching, in another embodiment of the present application, the method further includes the following steps.

Step S1 includes: determining a gap reference amount and a timing difference between the switching carriers.

It should be noted that the switching carriers herein refer to the carrier before the switching and the carrier after switching.

Optionally, the determining the gap reference amount between the switching carriers is implemented as follows:
determining a time of an end symbol for data transmitted on the carrier before the switching;
determining a time of a start symbol for data transmitted on the carrier after switching; and
determining the gap reference amount between the switching carriers based on the time of the end symbol and the time of the start symbol.

Specifically, the gap reference amount between the switching carriers may be determined as a difference between the time of the start symbol for the data transmitted on the carrier after the switching and the time of the end symbol for the data transmitted on the carrier before the switching.

Optionally, determination of the timing difference between the switching carriers specifically includes:
determining the timing difference between the switching carriers based on a timing advance of the carrier before the switching and a timing advance of the carrier after the switching.

Specifically, the timing difference between the switching carriers is determined as: the timing advance of the carrier after the switching minus the timing advance of the carrier before the switching.

Step S2 includes: determining the gap between the switching carriers based on the gap reference amount and the timing difference;

It should be noted that the gap between the switching carriers is determined as the gap reference amount minus the timing difference.

It should be noted that in a case that the carrier before the switching and the carrier after the switching do not belong to one timing advance (Time Advance, TA) group, the difference of different TA values needs to be considered when calculating the gap (i.e., GapO) between the switching carriers.

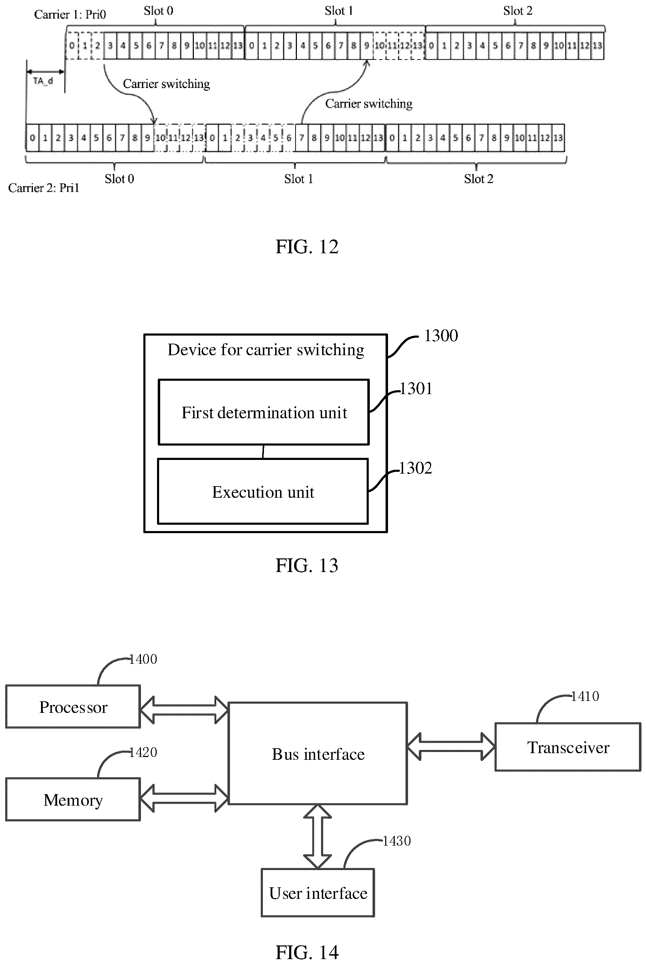

As shown in Fig. 12, the TA of carrier 1 and the TA of carrier 2 are different, with the difference value TA_d=3 symbols (e.g., 105µs). That is, with the same timing information (e.g., same time slot index, symbol index), the uplink data transmission occasion on carrier 2 is 3 symbols earlier than the uplink data transmission occasion on carrier 1. In this case, when calculating the GAP0 between the carrier before the switching and the carrier after the switching, correction based on TA_d is required, and the main method is as follows.

In step S11, the timing parameter of the carrier before the switching and the timing parameter of the carrier after the switching are obtained respectively, which is as follows:
it is assumed that the timing advance for transmitting the carrier before the switching is TA1; it is assumed that the time of the end symbol for the transmitted data calculated when TA=0 is symbol_time1;
the timing advance for transmitting the carrier after the switching is TA2; it is assumed that the time of the start symbol for the transmitted data calculated when TA=0 is symbol_time2;

In step S12, the gap reference amount Gapx between the carrier before the switching and the carrier after the switching is symbol_time2 minus symbol_time1, and the timing difference is TA_d= TA2-TA1.

In step S13, GAP0 = GAPx-TA_d.

It should be further noted that the TA is the result of accumulation of TA values indicated by the base station, which may be determined according to the related technologies; for the calculation of TA1 or TA2, only the TA adjustment amount indicated by the base station that is effective from the start time of the transmission of the carrier after the switching is calculated.

It should be noted that the embodiments of the present application provide a way of determining the carrier switching location for a case where more than 2 carriers are switched to each other, so as to ensure smooth execution of carrier switching and ensure communication reliability.

The technical solutions in the embodiments of this application may be applied to various systems, especially 5G systems. For example, the applicable system may be a global system of mobile communication (Global System of Mobile Communication, GSM) system, a code division multiple access (Code Division Multiple Access, CDMA) system, a wideband code division multiple access (Wideband Code Division Multiple Access, WCDMA) system, a general packet radio service (general packet radio service, GPRS) system, a long term evolution (Long Term Evolution, LTE) system, an LTE frequency division duplex (frequency division duplex, FDD) system, an LTE time division duplex (time division duplex, TDD) system, a long term evolution advanced (long term evolution advanced, LTE-A) system, a universal mobile telecommunication system (universal mobile telecommunication system, UMTS), a worldwide interoperability for microwave access (worldwide interoperability for microwave access, WiMAX) system, a 5G new radio (New Radio, NR) system, etc. These systems each include a terminal and a network device. The system may also include a core network part, such as an evolved packet system (Evolved Packet System, EPS), a 5G system (5GS), etc.

The terminal involved in the embodiments of the present application may refers to a device that provides voice and/or data connectivity to a user, a handheld device with a wireless connection function, or other processing devices connected to a wireless modem. In different systems, the name of the terminal may be different. For example, in 5G systems, the terminal may be referred to as a user equipment (User Equipment, UE). A wireless terminal may communicate with one or more core networks (Core Network, CN) through a radio access network (Radio Access Network, RAN). The wireless terminal may be a mobile terminal, such as a mobile phone (or referred to as a "cellular" phone) or a computer with a mobile terminal, for example, it may be a portable, pocket type, handheld, computer built-in, or vehicle mounted mobile device, which exchanges languages and/or data with a radio access network. For example, it may be a personal communication service (Personal Communication Service, PCS) phone, a cordless phone, a session initiated protocol (Session Initiated Protocol, SIP) phone, a wireless local loop (Wireless Local Loop, WLL) station, a personal digital assistant (Personal Digital Assistant, PDA), or other devices. Or the wireless terminal may be referred to as a system, a subscriber unit (subscriber unit), a subscriber station (subscriber station), a mobile station (mobile station), a mobile (mobile), a remote station (remote station), an access point (access point), a remote terminal (remote terminal), an access terminal (access terminal), a user terminal (user terminal), a user agent (user agent), or a user device (user device),which is not limited in the embodiments of this application.

The network device involved in the embodiments of the present application may be a base station, and the base station may have multiple cells providing services for terminals. According to different application scenarios, the base station may also be referred to as an access point, or may be a device in an access network that communicates with wireless terminals through one or more sectors on air interfaces, or may have other names. The network device may be configured to exchange received air frames and Internet protocol (Internet Protocol, IP) packets, serving as a router between the wireless terminals and rest of the access network, where the rest of the access network may include an Internet Protocol (IP) communication network. The network device may also coordinate attribute management of air interfaces. For example, the network device involved in the embodiments of this application may be a network device(Base Transceiver Station, BTS) in a global system for mobile communications (Global System for Mobile Communications, GSM) or a code division multiple access (Code Division Multiple Access, CDMA), or may be a network device (NodeB) in wide-band code division multiple access (Wide-band Code Division Multiple Access, WCDMA), or may be an evolutional network device (evolutional Node B, eNB or e-NodeB) in a long term evolution (Long Term Evolution, LTE) system or a 5G base station (gNB) in a 5G network architecture (next generation system), or may be a home evolved node B (Home evolved Node B, HeNB),a relay node (relay node), a femto (femto), a pico (pico), etc., which is not limited in the embodiments of this application. In some network structures, the network device may include a centralized unit (centralized unit, CU) node and a distributed unit (distributed unit, DU) node, and the centralized unit and the distributed unit may be geographically separated.

The network device and the terminal may each use one or more antennas to perform multi input multi output (Multi Input Multi Output, MIMO) transmission, where the MIMO transmission may be single user MIMO (Single User MIMO, SU-MIMO) or multiple user MIMO (Multiple User MIMO, MU-MIMO). According to the form and the quantity of the antenna combination, the MIMO transmission may be 2-dimension MIMO (2-dimension MIMO, 2D-MIMO), 3-dimension MIMO (3-dimension MIMO, 3D-MIMO), full dimension MIMO (full dimension MIMO, FD-MIMO), or massive MIMO (massive-MIMO), or may be diversity transmission, or precoding transmission, or beamforming transmission, etc.

As shown in FIG. 13, embodiments of the present application provide a device 1300 for carrier switching, applied to a user equipment, including:
a first determination unit 1301, configured to determine a carrier switching location based on switching configurations of carriers in the bands, where the quantity of configured bands used for switching is greater than 2; and
an execution unit 1302, configured to perform carrier switching based on the determined carrier switching location.

Optionally, the first determination unit 1301 is configured for:
determining switching configurations of the carriers in the bands used for switching; and
if the switching configurations of the carriers in the bands used for switching are the same, determining the carrier switching location based on priorities of the carriers in the bands used for switching.

Optionally, an implementation of determining the carrier switching location based on the priorities of the carriers in the bands used for switching includes:
determining a carrier with a lower priority from the carriers in the bands used for switching; and
determining the determined carrier with the lower priority as the carrier switching location.

The above manner may also be understood as: optionally, an implementation of determining the carrier switching location based on the priorities of the carriers in the bands used for switching includes:
determining a carrier with a low priority from the carriers in the bands used for switching; and
determining the determined carrier with the low priority as a carrier for performing carrier switching.

Optionally, the priorities of the carriers are determined in at least one of the following ways:
based on an index of each of the carriers;
based on a time at which information is transmitted on each of the carriers; or,
based on a type of information transmitted on each of the carriers.

Optionally, the index of each of the carriers is determined in at least one of the following ways:
based on a serving cell identity;
based on a physical cell identity; or,
based on an identity of a carrier used for dynamic uplink transmission channel switching configured by a high layer message.

Optionally, the first determination unit 1301 is configured for:
determining a switching carrier set corresponding to the carriers in the different bands, where the switching carrier set includes a switching configuration, and the switching configuration is used to indicate a carrier for which a data loss is allowed; and
determining the carrier switching location based on the switching configuration corresponding to the switching carrier set used for switching.

Optionally, an implementation of determining the carrier switching location based on the switching configuration corresponding to the switching carrier set used for switching includes:
determining the carrier indicated by the switching configuration as the carrier switching location.

The above manner may also be understood as: optionally, the determining the carrier switching location based on the switching configurations of the carriers in the bands includes:
determining a switching carrier set corresponding to the carriers in the different bands, where the switching carrier set includes a switching configuration; and
determining a carrier indicated by the switching configuration as a carrier for performing carrier switching.

Optionally, the carriers in the different bands include three carriers or four carriers.

Optionally, the first determination unit 1301 is configured for:
determining switching configurations of the carriers in the different bands, where the switching configurations include information about switching priorities corresponding to the different carriers; and
determining the carrier switching location based on the information about the switching priorities corresponding to the different carriers included in the switching configurations.

Optionally, an implementation of the determining the carrier switching location based on the information about the switching priorities corresponding to the different carriers included in the switching configurations includes:
determining a switching priority corresponding to a first carrier used for switching and a switching priority corresponding to a second carrier used for switching, based on the information about the switching priorities corresponding to the different carriers included in the switching configurations; and
determining, a carrier with a lower switching priority from the first carrier and the second carrier, as the carrier switching location.

The above manner may also be understood as: optionally, the determining the carrier switching location based on the information about the switching priorities corresponding to the different carriers included in the switching configurations includes:
determining a switching priority corresponding to a first carrier used for switching and a switching priority corresponding to a second carrier used for switching, based on the information about the switching priorities corresponding to the different carriers included in the switching configurations; and
determining, a carrier with a low switching priority from the first carrier and the second carrier, as a carrier for performing carrier switching.

Optionally, the execution unit 1302 is configured for:
determining a first time, where the first time is determined based on a carrier switching time and a gap between switching carriers;
during the first time, no data transmission is performed on the carrier corresponding to the carrier switching location.

The above manner may also be understood as follows: the execution unit 1302 is configured for:
determining a first time, where the first time is determined based on a carrier switching time and a gap between switching carriers;
during the first time, no data transmission is performed on the carrier for performing the carrier switching.

Optionally, the obtaining of the gap between the switching carriers includes:
determining a gap reference amount and a timing difference between the switching carriers; and
determining the gap between the switching carriers based on the gap reference amount and the timing difference.

Optionally, the determining of the gap reference amount between the switching carriers includes:
determining a time of an end symbol for data transmitted on the carrier before the switching;
determining a time of a start symbol for data transmitted on the carrier after switching; and
determining the gap reference amount between the switching carriers based on the time of the end symbol and the time of the start symbol.

Optionally, determination of the timing difference between the switching carriers includes:
determining the timing difference between the switching carriers based on a timing advance of the carrier before the switching and a timing advance of the carrier after the switching.

It should be noted that the device embodiments are in a one-to-one correspondence with the above method embodiments, all the implementations in the above method embodiments are applicable to the device embodiments, and the same technical effects can be achieved.

It should be noted that the division of units in the embodiments of this application is schematic and only serves as a division of logical functions, and there may be other division methods. In addition, in the embodiments of the present application, various functional units may be integrated into a single processing unit, or the various units may be physically separated, or two or more units may be integrated into one unit. The integrated unit in the above may be implemented in the form of hardware or may be implemented in the form of software functional units.

If the integrated unit is implemented in the form of software functional units and sold or used as an independent product, it may be stored in a processor readable storage medium. Based on this understanding, essence of the technical solutions of the present application, or the part contributing to the related technologies, or part or all of the technical solutions, may be embodied in the form of a software product. The computer software product is stored in a storage medium, and includes a number of instructions to enable a computer device (which may be a personal computer, a server, or a network device, etc.) or a processor (processor) to perform all or part of the steps of method described in the various embodiments of the present application. The storage medium includes a USB flash disk, a mobile hard disk, a read-only memory (Read-Only Memory, ROM), a random access memory (Random Access Memory, RAM), a magnetic disk, an optical disk, or other medium which can store program code.

As shown in FIG. 14, embodiments of the present application also provide a user equipment, including a processor 1400, a transceiver 1410, a memory 1420, and a program stored in the memory 1420 and executable by the processor 1400; the transceiver 1410 is connected to the processor 1400 and the memory 1420 via a bus interface, the processor 1400 is configured to read the program in the memory to perform the following operation:
determining a carrier switching location based on switching configurations of carriers in the bands, where the quantity of configured bands used for switching is greater than 2; and
performing carrier switching based on the determined carrier switching location.

The transceiver 1410 is configured to receive and transmit data under control of the processor 1400.

In FIG. 14, a bus architecture may include any quantity of interconnected buses and bridges. Various circuits including one or more processors represented by the processor 1400 and a memory represented by the memory 1420 are linked. The bus architecture may further link various other circuits together, such as a periphery component, a voltage stabilizer and a power management circuit, which are known in the art and are not further described herein. A bus interface provides an interface. The transceiver 1410 may be multiple elements, i.e., including a transmitter and a receiver, providing a unit for communicating with various other devices on transmission media. The transmission media include a wireless channel, a wired channel, an optical cable, or other transmission media. For different user equipment, the user interface 1430 may be an interface capable of connecting externally and internally with the required equipment. The connected equipment includes but not limited to a keypad, a display, a speaker, a microphone, a joystick, etc.

The processor 1400 is in charge of managing the bus architecture and common processes. The memory 1420 may store data used by the processor 1400 in performing operations.

Optionally, the processor 1400 may be a CPU (Central Processing Device), an ASIC (Application Specific Integrated Circuit), a FPGA (Field Programmable Gate Array), or a CPLD (Complex Programmable Logic Device), or the processor may adopt a multi-core architecture.

The processor is configured to execute any of the methods in the embodiments of the present application according to obtained executable instructions by calling the computer program stored in the memory. The processor and the memory may be physically arranged separately.

Optionally, the processor is configured to read the computer program in the memory to perform the following operation:
determining switching configurations of the carriers in the bands used for switching; and
if the switching configurations of the carriers in the bands used for switching are the same, determining the carrier switching location based on priorities of the carriers in the bands used for switching.

Optionally, the processor is configured to read the computer program in the memory to perform the following operation:
determining a carrier with a low priority from the carriers in the bands used for switching; and
determining the determined carrier with the low priority as the carrier switching location.

The above approach may also be understood as: optionally, the processor is configured to read the computer program in the memory to perform the following operation:
determining a carrier with a low priority from the carriers in the bands used for switching; and
determining the determined carrier with the low priority as a carrier for performing carrier switching.

Optionally, the priorities of the carriers are determined in at least one of the following ways:
based on an index of each of the carriers;
based on a time at which information is transmitted on each of the carriers; or,
based on a type of information transmitted on each of the carriers.

Optionally, the index of each of the carriers is determined in at least one of the following ways:
based on a serving cell identity;
based on a physical cell identity; or,
based on an identity of a carrier used for dynamic uplink transmission channel switching configured by a high layer message.

Optionally, the processor is configured to read the computer program in the memory to perform the following operation:
determining a switching carrier set corresponding to the carriers in the different bands, where the switching carrier set includes a switching configuration, and the switching configuration is used to indicate a carrier for which a data loss is allowed; and
determining the carrier switching location based on the switching configuration corresponding to the switching carrier set used for switching.

Optionally, the processor is configured to read the computer program in the memory to perform the following operation:
determining the carrier indicated by the switching configuration as the carrier switching location.

The above manner may also be understood as: optionally, the determining the carrier switching location based on the switching configurations of the carriers in the bands includes:
determining a switching carrier set corresponding to the carriers in the different bands, where the switching carrier set includes a switching configuration; and
determining a carrier indicated by the switching configuration as a carrier for performing carrier switching.

Optionally, the carriers in the different bands include three carriers or four carriers.

Optionally, the processor is configured to read the computer program in the memory to perform the following operation:
determining switching configurations of the carriers in the different bands, where the switching configurations include information about switching priorities corresponding to the different carriers; and
determining the carrier switching location based on the information about the switching priorities corresponding to the different carriers included in the switching configurations.

Optionally, the processor is configured to read the computer program in the memory to perform the following operation:
determining a switching priority corresponding to a first carrier used for switching and a switching priority corresponding to a second carrier used for switching, based on the information about the switching priorities corresponding to the different carriers included in the switching configurations; and
determining, a carrier with a lower switching priority from the first carrier and the second carrier, as the carrier switching location.

The above manner may also be understood as follows:
determining a switching priority corresponding to a first carrier used for switching and a switching priority corresponding to a second carrier used for switching, based on the information about the switching priorities corresponding to the different carriers included in the switching configurations; and
determining, a carrier with a low switching priority from the first carrier and the second carrier, as a carrier for performing carrier switching.

Optionally, the processor is configured to read the computer program in the memory to perform the following operation:
determining a first time, where the first time is determined based on a carrier switching time and a gap between switching carriers;
during the first time, no data transmission is performed on the carrier corresponding to the carrier switching location.

The above manner may also be understood as: the processor is configured to read the computer program in the memory to perform the following operation:
determining a first time, where the first time is determined based on a carrier switching time and a gap between switching carriers;
during the first time, no data transmission is performed on the carrier for performing the carrier switching.

Optionally, the processor is configured to read the computer program in the memory to perform the following operation:
determining a gap reference amount and a timing difference between the switching carriers; and
determining the gap between the switching carriers based on the gap reference amount and the timing difference.

Optionally, the processor is configured to read the computer program in the memory to perform the following operation:
determining a time of an end symbol for data transmitted on the carrier before the switching;
determining a time of a start symbol for data transmitted on the carrier after switching; and
determining the gap reference amount between the switching carriers based on the time of the end symbol and the time of the start symbol.

Optionally, the processor is configured to read the computer program in the memory to perform the following operation:
determining the timing difference between the switching carriers based on a timing advance of the carrier before the switching and a timing advance of the carrier after the switching.

It should be noted and understood that the division of the above modules is only a division of logical functions, which may be fully or partially integrated into a physical entity or physically separated in actual implementations. These modules may all be implemented in the form of software called by processing elements; or may all be implemented in the form of hardware; or, some modules may be implemented in the form of software called by processing elements, and some modules may be implemented in the form of hardware. For example, the determination module may be a separate processing element, or may be integrated into a certain chip of the above device, or, may be stored in the memory of the above device in the form of program code, and a certain processing element of the above device may call and execute the functions of the determination module. Other modules have similar implementations. In addition, all or part of these modules may be integrated together, and may be implemented independently. The processing element mentioned herein may be an integrated circuit with signal processing capability. In the implementation process, the various steps of the above method or the above various modules may be implemented by an integrated logic circuit in hardware form in elements of a processor or implemented by instructions in the form of software.

For example, the various modules, units, subunits or submodules may be one or more integrated circuits configured to implement the above methods, such as one or more application specific integrated circuits (Application Specific Integrated Circuit, ASIC), or one or more microprocessors (Digital Signal Processor, DSP), or one or more field programmable gate arrays (Field Programmable Gate Array, FPGA), etc. As another example, when a module described above is implemented in the form of scheduling program codes by a processing element, the processing element may be a general purpose processor, such as a central processing unit (Central Processing Unit, CPU) or other processors that may call program codes. As another example, these modules may be integrated together and implemented as a system-on-a-chip (system-on-a-chip, SOC).

Terms such as "first" and "second" in the specification and the claims of the present application are used to distinguish similar objects and are not necessarily used to describe a specific order or sequence. It should be understood that the terms used in this way may be interchanged under appropriate circumstances, so that the embodiments of the present application described herein may be implemented in a sequence other than those illustrated or described herein. In addition, terms such as "including" and "having" and any variations thereof are intended to cover non-exclusive inclusion. For example, a process, method, system, product or device including a series of steps or units is not limited to the steps or units that are clearly listed and may include other steps or units that are not clearly listed or are inherent to the process, method, product, or device. Moreover, the term "and/or" used in the specification and the claims indicates involving at least one of connected objects, for example, A and/or B and/or C means 7 situations, including: A alone, B alone, C alone, both A and B, both B and C, both A and C, and all of A, B and C. Similarly, the use of "at least one of A and B" in this specification and claims should be understood as "A alone, B alone, or both A and B".

At least one embodiment of the present application also provides a user equipment, including a memory, a processor, and a computer program stored in the memory and executable by the processor, the processor, when executing the program, performs various processes in the embodiments of the method for carrier switching applied to the user equipment, and same technical effects can be achieved, the repetition of which is not provided herein.

At least one embodiment of the present application also provides a computer readable storage medium, having a computer program stored thereon, and the computer program, when being execute by a processor, performs various processes in the embodiments of the above-mentioned method for carrier switching, and same technical effects can be achieved, the repetition of which is not provided herein. The computer readable storage medium may be a read-only memory (Read-Only Memory, ROM), a random access memory (Random Access Memory, RAM), a disk or a CD-ROM.

A person skilled in the art should understand that the embodiments of the present application may be provided as methods, systems, or computer program products. Therefore, the present application may adopt the form of complete hardware embodiments, complete software embodiments, or embodiments combining software and hardware aspects. Moreover, the present application may adopt the form of a computer program product implemented on one or more computer available storage media (including but not limited to a disk storage, an optical storage, etc.) containing computer available program code.

The present application is described with reference to flowcharts and/or block diagrams of methods, devices (systems), and computer program products according to the embodiments of the present application. It should be understood that each process and/or block in the flowchart and/or block diagram, and the combination of processes and/or blocks in the flowchart and/or block diagram may be implemented by computer executable instructions. These computer executable instructions may be provided to a general-purpose computer, a special-purpose computer, an embedded processor, or a processor of other programmable data processing device to generate a machine, so that a device, which is configured to implement functions specified in one process or multiple processes in the flowchart and/or one block or multiple blocks in the block diagram, is generated through the instructions executed by the computer or the processor of other programmable data processing device.

These processor executable instructions may be stored in a processor readable memory that may guide a computer or other programmable data processing device to operate in a specific manner, so that the instructions stored in the processor readable memory generate a product including an instruction device. The instruction device implements the functions specified in one process or multiple processes in the flowchart and/or one block or multiple blocks in the block diagram.

These processor executable instructions may be loaded in a computer or other programmable data processing device, to enable a series of operation steps to be executed on the computer or other programmable equipment to realize computer-implemented processing, so that the instructions executed on the computer or other programmable device provide steps for implementing functions specified in a process or multiple processes in the flowchart and/or a block or multiple blocks in the block diagram.

Apparently, those skilled in the art may make various modifications and variations to the present application, without departing from the spirit and scope of the present application. In this case, if the modifications and variations of the present application fall within the scope of the claims of the present application and their equivalent techniques, the present application is intended to include these modifications and variations.

## Claims

1. A method for carrier switching, performed by a user equipment, comprising:
determining a carrier switching location based on switching configurations of carriers in the bands, wherein the quantity of configured bands used for switching is greater than 2; and
performing carrier switching based on the determined carrier switching location.

2. The method according to claim 1, wherein the determining the carrier switching location based on the switching configurations of the carriers in the bands comprises:
determining switching configurations of the carriers in the bands used for switching; and
if the switching configurations of the carriers in the bands used for switching are the same, determining the carrier switching location based on priorities of the carriers in the bands used for switching.

3. The method according to claim 2, wherein the determining the carrier switching location based on the priorities of the carriers in the bands used for switching comprises:
determining a carrier with a low priority from the carriers in the bands used for switching; and
determining the determined carrier with the low priority as a carrier for performing carrier switching.

4. The method according to claim 2, wherein the priorities of the carriers are determined in at least one of the following ways:
based on an index of each of the carriers;
based on a time at which information is transmitted on each of the carriers; or,
based on a type of information transmitted on each of the carriers.

5. The method according to claim 4, wherein the index of each of the carriers is determined in at least one of the following ways:
based on a serving cell identity;
based on a physical cell identity; or,
based on an identity of a carrier used for dynamic uplink transmission channel switching configured by a high layer message.

6. The method according to claim 1, wherein the determining the carrier switching location based on the switching configurations of the carriers in the bands comprises:
determining a switching carrier set corresponding to the carriers in the different bands, wherein the switching carrier set comprises a switching configuration; and
determining a carrier indicated by the switching configuration as a carrier for performing carrier switching.

7. The method according to claim 6, wherein the carriers in the different bands comprise three carriers or four carriers.

8. The method according to claim 1, wherein the determining the carrier switching location based on the switching configurations of the carriers in the bands comprises:
determining switching configurations of the carriers in the different bands, wherein the switching configurations comprise information about switching priorities corresponding to the different carriers; and
determining the carrier switching location based on the information about the switching priorities corresponding to the different carriers comprised in the switching configurations.

9. The method according to claim 8, wherein the determining the carrier switching location based on the information about the switching priorities corresponding to the different carriers comprised in the switching configurations comprises:
determining a switching priority corresponding to a first carrier used for switching and a switching priority corresponding to a second carrier used for switching, based on the information about the switching priorities corresponding to the different carriers comprised in the switching configurations; and
determining, a carrier with a low switching priority from the first carrier and the second carrier, as a carrier for performing carrier switching.

10. The method according to claim 3, claim 7 or claim 9, wherein the performing carrier switching based on the determined carrier switching location comprises:
determining a first time, wherein the first time is determined based on a carrier switching time and a gap between switching carriers;
wherein, during the first time, no data transmission is performed on the carrier for performing the carrier switching.

11. The method according to claim 10, wherein determination of the gap between the switching carriers comprises:
determining a gap reference amount and a timing difference between the switching carriers; and
determining the gap between the switching carriers based on the gap reference amount and the timing difference.

12. The method according to claim 11, wherein determination of the timing difference between the switching carriers comprises:
determining the timing difference between the switching carriers based on a timing advance of the carrier before the switching and a timing advance of the carrier after the switching.

13. A user equipment, comprising a memory, a transceiver, and a processor;
wherein the memory is configured to store a computer program; the transceiver is configured to transmit and receive data under control of the processor; and the processor is configured to read the computer program in the memory to perform the following operation:
determining a carrier switching location based on switching configurations of carriers in the bands, wherein the quantity of configured bands used for switching is greater than 2; and
performing carrier switching based on the determined carrier switching location.

14. The user equipment according to claim 13, wherein the processor is configured to read the computer program in the memory to perform the following operation:
determining switching configurations of the carriers in the bands used for switching; and
if the switching configurations of the carriers in the bands used for switching are the same, determining the carrier switching location based on priorities of the carriers in the bands used for switching.

15. The user equipment according to claim 14, wherein the processor is configured to read the computer program in the memory to perform the following operation:
determining a carrier with a low priority from the carriers in the bands used for switching; and
determining the determined carrier with the low priority as a carrier for performing carrier switching.

16. The user equipment according to claim 13, wherein the processor is configured to read the computer program in the memory to perform the following operation:
determining a switching carrier set corresponding to the carriers in the different bands, wherein the switching carrier set comprises a switching configuration; and
determining a carrier indicated by the switching configuration as a carrier for performing carrier switching.

17. The user equipment according to claim 13, wherein the processor is configured to read the computer program in the memory to further perform the following operation:
determining switching configurations of the carriers in the different bands, wherein the switching configurations comprise information about switching priorities corresponding to the different carriers; and
determining the carrier switching location based on the information about the switching priorities corresponding to the different carriers comprised in the switching configurations.

18. The user equipment according to claim 15, claim 16 or claim 17, wherein the processor is configured to read the computer program in the memory to further perform the following operation:
determining a first time, wherein the first time is determined based on a carrier switching time and a gap between switching carriers;
wherein, during the first time, no data transmission is performed on the carrier for performing the carrier switching.

19. A device for carrier switching, applied to user equipment, comprising:
a first determination unit, configured to: determine a carrier switching location based on switching configurations of carriers in the bands, wherein the quantity of configured bands used for switching is greater than 2; and
an execution unit, configured to perform carrier switching based on the determined carrier switching location.

20. A computer readable storage medium, having a computer program stored, wherein the computer program is configured to cause a processor to perform the method according to any one of claims 1 to 12.
